# EUROPÄISCHE PATENTSCHRIFT

(11) **EP 3 007 886 B1**
(45) Veröffentlichungstag und Bekanntmachung des Hinweises auf die Patenterteilung: **07.12.2016**
(21) Anmeldenummer: 15717845.0
(22) Anmeldetag: 14.04.2015
(51) Int. Cl.: B29C 71/04, B29C 71/02, F16D 69/02, B29C 35/08, B29L 31/00, B29L 31/16

(54) **VERFAHREN UND VORRICHTUNG ZUR THERMISCHEN BEHANDLUNG VON REIBBELÄGEN**
METHOD AND DEVICE FOR THE THERMAL TREATMENT OF FRICTION LININGS
PROCÉDÉ ET DISPOSITIF DE TRAITEMENT THERMIQUE DE GARNITURES DE FRICTION

(30) Priorität: 17.04.2014 DE 102014105484
(43) Veröffentlichungstag der Anmeldung: 20.04.2016
(73) Patentinhaber: TMD Friction Services GmbH, 51381 Leverkusen (DE)
(72) Erfinder: GOLDBACH, Kai, 45481 Mühlheim an der Ruhr (DE); HUEBER, Thomas, 45277 Essen (DE); LEWIS, Richard, 40822 Mettmann (DE); PERIN, Paulo, 51375 Leverkusen (DE)
(74) Vertreter: Müller, Eckhard
(86) Internationale Anmeldenummer: PCT/EP2015/058020
(87) Internationale Veröffentlichungsnummer: WO 2015/158686

(56) Entgegenhaltungen:
- EP-A1- 0 355 876
- EP-A2- 0 420 632
- EP-B1- 1 085 231
- DE-A1- 3 318 487
- DE-A1- 3 336 244
- DE-A1- 19 642 288
- DE-A1-102009 011 910
- DE-C2- 10 063 256
- US-A- 3 236 160

## Beschreibung

Die vorliegende Erfindung betrifft ein Verfahren und eine entsprechende Vorrichtung zur thermischen Behandlung und damit auch zum Härten von Reibbelägen.

Ein Verfahren und eine Vorrichtung der eingangs genannten Art sind z.B. aus der EP 1 085 231 B1 und der DE 100 63 256 C2 und dem dort zitierten Stand der Technik bekannt. Sie dienen allerdings nur für die Behandlung der Oberflächen von Reibbelägen, wie sie insbesondere bei Bremsen bzw. Bremsbelägen von Kraftfahrzeugen zum Einsatz kommen.

Derartige Reibbeläge und damit auch die Reibbelagoberflächen enthalten in der Regel organische Bindemittel. Reibbeläge werden bevorzugt aus einem unter erhöhtem Druck und Temperatur gepressten Gemisch aus organischen und anorganischen Stoffen hergestellt. Als Reibbeläge für Bremsen und Kupplungen werden z.B. Kunststoffe verwendet, die aus einem Festigkeitsträger (z.B. Aramidfasern), einem oder mehreren Bindemitteln (meist Kunstharze) und aus verschiedensten anorganischen und auch organischen Füllstoffen zur Einstellung des gewünschten Reibwertes bestehen. Für Scheiben- und Klotzbremsen werden oft Reibbeläge verwendet, die unter Verwendung von Sinterwerkstoffen hergestellt werden.

Um ein sogenanntes Greenfading der Bremsen mit entsprechender Hitzeentwicklung beim ersten Bremseinsatz zu verhindern, was insbesondere auf die in den Reibbelagoberflächen enthaltenen organischen Bindemittel zurückzuführen ist, werden die Reibbelagoberflächen vor dem Einbau der Bremsbeläge einer thermischen Behandlung, dem sogenannten "Scorchen" unterzogen. Diese Behandlung dient zur Erhöhung der Porosität der Belagoberfläche durch sog. Karbonisierung der in den Reibbelägen und in deren Oberflächen enthaltenen organischen Materialien.

Eine bekannte Art des Scorchens besteht in der Behandlung der Reibbelagoberflächen mit einer Gasflamme. Dabei ist die Temperatur auf der Oberfläche jedoch stark abhängig von der Gasflamme, insbesondere von der Art des verwendeten Brenngases und der Sauerstoffzufuhr während der Behandlung. Eine zu heiße Flamme kann dabei zum Schmelzen der anorganischen Bestandteile bzw. der Metalle an der Reibbelagoberfläche führen, eine kalte Flamme dagegen zu überlangen Behandlungszeiten und zum Verrußen der Reibbelagoberfläche.

Gemäß EP 0 799 391 B1 sollen die oben genannten Probleme beim Scorchen durch das Anlegen einer heißen Platte auf die Belagoberfläche verhindert werden. Dieses Verfahren erfordert einen hohen Investitionsaufwand, und das Problem der ungleichmäßigen Erhitzung der Oberfläche wird nicht zufriedenstellend gelöst. Weiterhin können die durch das Anpressen der heißen Platte auf der Belagoberfläche sich bildenden Gase von dort nicht ausreichend abgeführt werden.

Zur Vermeidung der oben beschriebenen Nachteile bei der Behandlung von Reibbelagoberflächen wird in der EP 1 085 231 B1 ein modifiziertes Verfahren für diesen Zweck vorgeschlagen. Dabei wird die Reibbelagoberfläche für eine begrenzte Zeitdauer durch folgende Maßnahmen auf eine erhöhte Temperatur gebracht:
a) in einer inerten, oxidierenden oder reduzierenden Atmosphäre wird die Reibbelagoberfläche mit IR-Strahlung behandelt, die
b) eine Wellenlänge von 780 bis 1400nm (mit einem Intensitätsmaximum bei 1200nm) und eine Leistungsdichte von 150 bis 800 kW/m² aufweist.

Dadurch wird die Belagoberfläche für einen Zeitraum von 5 bis 40 s auf eine Temperatur von 700 bis 900°C erhitzt.

Weiterhin wird in dieser EP-Schrift eine Vorrichtung zur Durchführung des genannten Verfahrens beschrieben, bei der es sich um einen IR-Ofen oder IR-Tunnel handelt. Diese Vorrichtung weist unter anderem eine Absaugvorrichtung im Behandlungsraum (Ofenraum) zur Entfernung der beim Scorchen entstandenen Gase auf. Die Reibbeläge werden mittels eines Transportsystems, bevorzugt ein Förderband, kontinuierlich durch den Ofenraum geführt. Im Ofenraum befindet sich ein IR-Modul zur Erzeugung der zur thermischen Oberflächenbehandlung notwendigen IR-Strahlung. Dieses Modul besteht typischer Weise aus 5 bis 40 einzelnen IR-Strahlern, die zur Schonung der Anlage und zur Energieersparnis innerhalb eines Zeitraums von ca. 5 s ein- und ausgeschaltet werden können.

Auch die DE 100 63 256 C2 schlägt ein verbessertes Verfahren zur thermischen Behandlung von Reibbelägen zur Erhöhung von deren Oberflächenporosität durch Karbonisierung und damit zur Verbesserung von deren Materialeigenschaften bzw. deren Bremswirkung vor.

Sehr ähnlich dem vorangehend beschriebenen Verfahren nach der EP 1 085 231 B1 wird gemäß DE-Schrift dazu die Belagoberfläche mit IR-Strahlung behandelt. Diese Strahlung weist eine Wellenlänge von 800 - 1500 nm und eine Leistungsdichte (auf der Belagoberfläche) von 300 bis 700 kW/m² auf. Es werden damit Oberflächentemperaturen von 550 bis 850°C während einer Behandlungszeit von 2 bis 5 s erzeugt. Die dabei verwendete Vorrichtung entspricht weitgehend dem IR-Ofen oder IR-Tunnel, wie er aus dem genannten EP-Patent bekannt ist. Zur Erzeugung der IR-Strahlung werden hier im Behandlungsraum eine oder mehrere Halogenlampen verwandt.

Somit ist den aus dem Stand der Technik bekannten Verfahren zur thermischen Behandlung von Reibbelagoberflächen mittels IR-Strahlung gemein, dass diese Behandlung mittels kurzwelliger Infrarotstrahlung bei sehr hoher Leistungsdichte auf der Belagoberfläche erfolgt. Als Vorteile der kurzwelligen Infrarotstrahlung werden insbesondere genannt, dass
(a) diese Strahlung die Wärmeenergie sehr effizient und ohne Medium transportiert, wodurch die Oberflächenbehandlung auch im Unterdruckbetrieb durchgeführt werden kann und die beim Scorchen auftretenden Zersetzungsprodukte aus den organischen Bestandteilen der Bremsbelagmischung mit starken Absaugeinrichtungen abgeführt werden können und
(b) die zur Erzeugung der Infrarotstrahlung verwendeten Strahler eine sehr kurze Reaktionszeit von 1 bis 3 s haben, so dass die Anlage nicht ständig in Betrieb sein muss, um die erforderlichen Temperaturen zu erreichen.

Die vorangehend geschilderten Verfahren weisen jedoch insbesondere bei der Massenproduktion von Bremsbelägen Nachteile auf, die im Sinne eines einfach handhabbaren und robusten Produktionsverfahren mit gleichbleibend hoher Produktqualität und im Hinblick auf Kosten- und Energieeffizienz verbesserungswürdig erscheinen. So können z.B. aufgrund der hohen Leistungsdichte der IR-Strahler, der kurzen Behandlungszeiten und der dabei (kurzzeitig) auftretenden hohen Oberflächentemperaturen entsprechende Temperaturdifferenzen auf den Reibbelagoberflächen auftreten, die zu Inhomogenitäten bei den Materialeigenschaften der so behandelten Reibbeläge führen. Weiterhin müssen die beschriebenen Vorrichtungen zur Schonung und Energieersparnis öfter ein- und ausgeschaltet werden. Schließlich führen die im Stand der Technik beschriebenen Verfahren nur zur Karbonisierung der Reibbelagoberflächen, während ein weitergehendes Härten des (gesamten) Reibbelags, dessen Zusammensetzung sich nicht von der der Oberfläche unterscheidet, nicht erfolgt.

Aufgabe der vorliegenden Erfindung war daher die Bereitstellung eines Verfahrens und einer dafür geeigneten Vorrichtung oder Anordnung zur thermischen Behandlung (auch Härtung oder Erhöhung der Porosität) von Reibbelägen, welche die aus dem Stand der Technik bekannten Nachteile vermeidet bzw. die bekannten Verfahren und Vorrichtungen weiter verbessert. Zudem sollte die thermische Behandlung der Reibbeläge über eine Karbonisierung allein der Reibbelagoberfläche hinausgehen.

Die Aufgabe wird insbesondere durch ein Verfahren gemäß Anspruch 1 und eine Verwendung gemäß Anspruch 8 gelöst.

Bei dem erfindungsgemäßen Infrarotstrahler handelt es sich um einen elektrischen Widerstandsheizleiter, der auf geeignetem keramischem Material aufliegt oder auf diesem Material montiert ist. Dies schützt den Heizleiter vor Überhitzung und ermöglicht die Verlängerung seiner Lebensdauer, insbesondere auch im Dauerbetrieb der Vorrichtung. Dies ist erfindungsgemäß bevorzugt und vermeidet ein wiederholtes an- und ausschalten der Infrarotstrahlungsquelle. Dadurch wird im Inneren der erfindungsgemäßen Vorrichtung (des erfindungsgemäßen IR-Ofens oder IR-Tunnels) eine optimal gleichmäßige Behandlungstemperatur für die Reibbeläge zur Verfügung gestellt.

Der Werkstoff, der zur Befestigung des Heizleiters verwendet wird, ist elektrisch nichtleitend und sollte über gute Emissionseigenschaften im gewünschten IR-Wellenlängenbereich verfügen. Unter Berücksichtigung dieser Kriterien sind IR-Strahler in den unterschiedlichsten Geometrien herstellbar. Somit kann erfindungsgemäß die Ofen - oder Behandlungskammer optimal ausgekleidet und damit eine optimale Temperaturführung und Temperaturkonstanz im Ofenraum sicher gestellt werden. Für die Zwecke der Erfindung haben sich insbesondere keramische Werkstoffe in Kombination mit dem elektrischen Heizleiter bewährt. Dabei kommen bevorzugt Keramik-Unterlagen oder Keramik-Fliesen kombiniert mit Metallbändern oder - drähten zum Einsatz.

Solche mit keramischen Strahlern oder Heizfeldern ausgestattete IR-Öfen oder IR-Tunnel bzw. entsprechende Ofenkonzepte einschl. Absaugeinrichtungen für bei der Behandlung entstehende Gase und einschl. geeigneter Fördereinrichtung zum Transport des zu behandelnden Materials durch den Ofenraum sind im Handel erhältlich.

Die erfindungsgemäßen IR-Strahler/Heizfelder emittieren in der Regel IR-Strahlung im Wellenlängenbereich von bevorzugt 2260-3000 nm mit einer Flächenleistung von bevorzugt 10 - 80 kW/m², wobei der insbesonders bevorzugte Wert hier bei 20-40 kW/m² liegt. Aus diesen Werten ergeben sich erfindungsgemäß für die üblicherweise für KfZ-Bremsbeläge, insbesondere Scheibenbremsbeläge, verwendeten Reibbelagmischungen Behandlungszeiten für die thermische Behandlung oder die Härtung der Reibbeläge von 300 bis 2400 s, bevorzugt von 600 bis 1200 s. Dabei wird eine Oberflächentemperatur auf dem Reibbelag von 300 bis 500 °C, bevorzugt von 350 bis 450 °C, erzeugt

Neben den genannten elektrischen Widerstandsinfrarotstrahlern können auch z. B. mit Gas beheizte keramische Heizfelder (wie keramische Porenstrahler) als IR-Strahler verwendet werden. Erfindungsgemäß wesentlich und bevorzugt ist die Einhaltung der vorstehend genannten Prozessparameter, nicht der IR-Strahlertyp, mit dem diese erzeugt werden.

Die erfindungsgemäße Verwendung von IR-Öfen / Vorrichtungen mit Infrarotstrahlungsquellen (Gas beheizte keramische Heizfelder oder elektr. IR-Strahler) resultiert somit insbesondere in den nachfolgenden Vorteilen: es ist keine zusätzliche Kühlung der IR-Strahler/Heizfelder erforderlich, der Ofenraum kann in einfacher Bauweise ausgeführt werden, optimale Temperaturführung mit entsprechender reproduzierbarer Produktqualität, deutliche Energieersparnis durch niedrigere Behandlungstemperaturen. Ferner kann durch die Variation von Behandlungsdauer, IR-Intensität / Temperatur (Strahlerabstand) jedes beliebige Härteprofil (Oberflächenhärtung bis Härtung der gesamten Reibbelagmasse) des Reibbelags und damit auch dessen mechanische Eigenschaften durch einfache Routineversuche eingestellt werden.

Die weitere Ausgestaltung der Vorrichtung zur thermischen Behandlung von Reibbelägen kann einfach an die individuellen Bedürfnisse des jeweiligen Betriebes angepasst werden und kann Ausstattungselemente umfassen, wie diese bei den handelsüblichen Produkten und im Stand der Technik, z.B. gemäß EP 1 085 231 B1 oder DE 100 63 256 C2, vorgesehen sind. Dazu zählen z.B.:
Eine Absaugvorrichtung, vorzugsweise im Ofen- oder Behandlungsraum, zur Abführung der durch die thermische Behandlung entstehenden gasförmigen Substanzen, Kühlvorrichtung zur Kühlung der Reibbeläge nach der thermischen Behandlung, Transportmittel wie z.B. ein Förderband zum Transport der Reibbeläge/Reibbelagoberflächen durch den Ofen-/Behandlungsraum, Prozessüberwachungssensoren, insbesondere Temperatursensoren für die Reibbelagoberflächen. So kann z.B. im Anschluss an den Ofen-/Behandlungsraum ein Temperatursensor angeordnet sein, welcher mit der Steuerung der Infrarotstrahlungsquelle verbunden ist und über den die Einhaltung der gewünschten Produktoberflächentemperatur der Reibbeläge überwacht und gesteuert werden kann. Über diese Temperaturerfassung können auch defekte Reibbeläge direkt aus dem Produktionsprozess ausgesondert werden. Sensoren zur Objekterfassung vor und nach Eintritt in den Behandlungsraum können zur weiteren Steuerung des erfindungsgemäßen Verfahrens/der Vorrichtung verwendet werden.

Die Vorrichtung und das erfindungsgemäße Verfahren entsprechen somit weitgehend den Vorrichtungen und Verfahren gemäß EP 1 085 231 B1 und/oder DE 100 63 256 C2 und unterscheiden sich von diesen insbesondere durch die Verwendung eines IR-Ofens/IR-Tunnels, der mit den beschriebenen Infrarotstrahlungsquellen ausgestattet ist, und die dort herrschenden Prozessparameter. Die Offenbarung dieser zuletzt genannten Dokumente wird insoweit ausdrücklich als Bestandteil in die vorliegende Beschreibung mit aufgenommen.

Im Folgenden werden Eigenschaften und Vorteile des erfindungsgemäßen Verfahrens beispielhaft beschrieben. Dies dient zur Illustration der vorliegenden Erfindung, ohne diese dadurch in irgendeiner Hinsicht zu beschränken. Jede sich für den Fachmann ergebende, technisch sinnvolle Kombination aus Parametern und/oder Ausstattungselementen wird von der vorliegenden Erfindung umfasst.

Das erfindungsgemäße Verfahren zur thermischen Behandlung von Reibbelägen führt aufgrund der gegenüber dem Stand der Technik deutlich verlängerten Behandlungszeiten und geringerer Flächenleistung der IR-Strahler zur Erwärmung des gesamten Reibbelags und nicht nur von dessen Oberfläche. Es entsteht ein relativ flacher Temperaturgradient entlang der Reibbelagdicke mit der höchsten Temperatur auf der Reibbelagoberfläche und der niedrigsten Temperatur auf der gegenüberliegenden (den IR-Strahlern abgewandten) Seite, die aber dort bevorzugt immer noch mindestens 300 °C beträgt. D.h., die gesamte Reibmasse wird auf eine relativ konstante Temperatur erwärmt, was zu einem einheitlichen Härteprofil entlang der Reibbelagdicke führt. Inhomogenitäten der Produkte aufgrund unterschiedlich hoher Temperaturen während der thermischen Behandlung auf (Teilen) der Oberfläche und im Innern des Reibbelags werden so weitgehend vermieden. Die Reproduzierbarkeit einer einheitlichen Produktqualität ist deutlich verbessert.

Weitere Vorteile der erfindungsgemäßen thermischen Behandlung sind z.B.:
Die IR-Strahler können aufgrund ihrer geringeren Flächenleistung deutlich näher an die zu behandelnden Reibbeläge herangeführt werden, die Energie (Wärme) wird effizient auf die Reibbelagsmasse übertragen und somit Energie eingespart, und die Menge an unerwünschten Abgasen während der Behandlung ist deutlich reduziert.

Die vorliegende Erfindung umfasst schließlich auch ein Verfahren zur thermischen Behandlung von Reibbelägen, bei dem sich an die beschriebene thermische Behandlung mit langer Behandlungszeit bei moderaten Temperaturen eine zweite, kurze Behandlungszeit, wie z.B. im zitierten Stand der Technik beschrieben, anschließt, bei der die Heizleistung der IR-Strahler kurzzeitig erhöht wird und durch diese intensive Heizung nur die Oberfläche des Reibbelags auf eine erhöhte Temperatur gebracht wird. Dabei entspricht der erste Schritt einem durchgehenden Härten der gesamten Reibbelagmasse und der zweite Schritt einem Scorchen nur der Reibbelagoberfläche.

## Patentansprüche

1. Verfahren zur thermischen Behandlung von Reibbelägen, bei dem der gesamte Reibbelag unter Verwendung von keramischen IR-Strahlern oder keramischen IR-Heizfeldern welche IR-Strahlung mit einem Strahlungsleistungsmaximum im Wellenlängenbereich von 2260 - 3000 nm erzeugen, erwärmt wird.

2. Verfahren nach Anspruch 1, **dadurch gekennzeichnet, dass** die IR-Strahlungsquellen eine Flächenleistung von 10 - 80 kW/m² aufweisen.

3. Verfahren nach Anspruch 2, **dadurch gekennzeichnet, dass** die IR-Strahlungsquellen eine Flächenleistung von 20 - 40 kW/m² aufweisen.

4. Verfahren nach einem der Ansprüche 1 bis 3, **dadurch gekennzeichnet, dass** es sich bei dem IR-Strahler um einen elektrischen Widerstandsheizleiter handelt, der auf eine keramische Unterlage montiert ist.

5. Verfahren nach einem der Ansprüche 1 bis 3, **dadurch gekennzeichnet, dass** es sich bei den IR-Heizfeldern um Gas beheizte keramische Porenstrahler handelt.

6. Verfahren nach einem der Ansprüche 1 bis 5, **dadurch gekennzeichnet, dass** die Behandlungsdauer der Reibbeläge 300 - 2400 s beträgt.

7. Verfahren nach einem der Ansprüche 1 bis 6, **dadurch gekennzeichnet, dass** auf den Reibbelägen eine Oberflächentemperatur von 300 - 500 °C erzeugt wird.

8. Verwendung von keramischen IR-Strahlern oder keramischen IR-Heizfeldern, welche IR-Strahlung mit einem Strahlungsleistungsmaximum im Wellenlängenbereich von 2260 - 3000 nm erzeugen, zur thermischen Behandlung von Reibbelägen, wobei der gesamte Reibbelag erwärmt wird..

## Claims

1. Method for the thermal treatment of friction linings, in which the entire friction lining is heated while using ceramic IR heaters or ceramic IR heating fields that generate IR radiation with a radiancy maximum in the wavelength range of 2260 - 3000 nm.

2. Method according to claim 1, **characterized in that** the sources of IR radiation have an area output of 10 - 80 kW/m².

3. Method according to claim 2, **characterized in that** the sources of IR radiation have an area output of 20 - 40 kW/m².

4. Method according to one of the claims 1 to 3, **characterized in that** the IR heater is an electric resistance heater conductor that is mounted onto a ceramic base.

5. Method according to one of the claims 1 to 3, **characterized in that** the IR heating fields are gas-heated ceramic porous burners.

6. Method according to one of the claims 1 to 5, **characterized in that** the duration of treatment of the friction linings is 300 - 2400 s.

7. Method according to one of the claims 1 to 6, **characterized in that** a surface temperature of 300 - 500°C is generated on the friction linings.

8. Use of ceramic IR heaters or ceramic IR heating fields that generate IR radiation with a radiancy maximum in the wave range of 2260 - 3000 nm for the thermal treatment of friction linings, wherein the entire friction lining is heated.

## Revendications

1. Procédé pour le traitement thermique de garnitures de friction, dans lequel l'ensemble de la garniture de friction est chauffé en utilisant des dispositifs de chauffage à infrarouge céramiques ou des panneaux chauffants à infrarouge céramiques qui génèrent un rayonnement infrarouge avec une puissance de rayonnement maximale dans la plage de longueur d'ondes de 2260-3000 nm.

2. Procédé selon la revendication 1, **caractérisé en ce que** les sources de rayonnement infrarouge présentent une puissance en surface de 10-80 kW/m².

3. Procédé selon la revendication 2, **caractérisé en ce que** les sources de rayonnement infrarouge présentent une puissance en surface de 20-40 kW/m².

4. Procédé selon l'une quelconque des revendications 1 à 3, **caractérisé en ce que** le dispositif de chauffage infrarouge est un conducteur chauffant à résistance électrique qui est monté sur un subjectile en céramique.

5. Procédé selon l'une quelconque des revendications 1 à 3, **caractérisé en ce que** les panneaux chauffants à infrarouge sont des dispositifs de chauffage à pores céramiques chauffés au gaz.

6. Procédé selon l'une quelconque des revendications 1 à 5, **caractérisé en ce que** la durée de traitement des garnitures de friction est de 300-2400 s.

7. Procédé selon l'une quelconque des revendications 1 à 6, **caractérisé en ce qu'**une température de surface de 300-500° C est générée sur les garnitures de friction.

8. Utilisation de dispositifs de chauffage à infrarouge céramiques ou de panneaux chauffants à infrarouge céramiques qui génèrent un rayonnement infrarouge ayant une puissance de rayonnement maximale dans la plage de longueur d'ondes de 2260-3000 nm, pour le traitement thermique de garnitures de friction, l'ensemble de la garniture de friction étant chauffé.
